# EUROPÄISCHE PATENTSCHRIFT

(11) **EP 0 865 711 B1**
(45) Veröffentlichungstag und Bekanntmachung des Hinweises auf die Patenterteilung: **15.05.2002**
(21) Anmeldenummer: 96945995.7
(22) Anmeldetag: 19.11.1996
(51) Int. Cl.: H04Q 7/32, H04Q 7/22

(54) **VERFAHREN ZUR ANPASSUNG VON ADAPTIVEN FUNKTEILNEHMERSTATIONEN AN ÜBERTRAGUNGSNETZE UND EINE ENTSPRECHENDE FUNKTEILNEHMERSTATION**
METHOD OF ADAPTING ADAPTIVE RADIO SUBSCRIBER STATIONS TO TRANSMISSION NETWORKS AND A SUITABLE RADIO SUBSCRIBER STATION
PROCEDE POUR L'ADAPTATION DE POSTES D'ABONNE RADIO ADAPTATIFS A DES RESEAUX DE TRANSMISSION ET POSTE D'ABONNE RADIO CORRESPONDANT

(30) Priorität: 05.12.1995 DE 19545508
(43) Veröffentlichungstag der Anmeldung: 23.09.1998
(73) Patentinhaber: SIEMENS AKTIENGESELLSCHAFT, 80333 München (DE)
(72) Erfinder: KLAS, Günter, D-85757 Karlsfeld (DE); HAFERBECK, Ralf, D-85716 Unterschleissheim (DE); ERNST, Detlef, D-82041 Oberhaching (DE)
(86) Internationale Anmeldenummer: DE9602207
(87) Internationale Veröffentlichungsnummer: WO9721319

(56) Entgegenhaltungen:
- EP-A- 0 510 322
- EP-A- 0 562 890
- WO-A-92/17943
- GB-A- 2 294 844
- PROCEEDINGS OF THE NATIONAL COMMUNICATIONS FORUM, Bd. 42, Nr. 2, 30.September 1988, Seiten 1706-1713, XP000053946 JACKSON P E ET AL: "PORTABLE COMMUNICATION"

## Beschreibung

Die Erfindung betrifft ein Verfahren zur Anpassung von adaptiven Funkteilnehmerstationen an Übertragungsnetze mit unterschiedlichen Funkübertragungsschnittstellen und eine entsprechende Funkteilnehmerstation.

In Übertragungsnetzen wie beispielsweise dem zellularen Mobilfunknetz nach dem GSM-Standard (Global System for Mobile Communication) werden grundlegende Schnittstelleninformationen in der Abwärtsübertragungsrichtung (downlink) zu den Funkteilnehmerstationen ausgesendet, wenn die Funkteilnehmerstationen im Übertragungsnetz bereits eingebucht sind. Die Schnittstelleninformationen gelangen dabei über Signalisierungskanäle - insbesondere den Rundfunkkanal (Broadcast Control Channel BCCH) - der standardisierten Funkübertragungsschnittstelle zu den Funkteilnehmerstationen - siehe "GSM-Funkschnittstelle", von P. Smolka, Telekompraxis 4/93, Seite 19.

Sobald eine adaptive Funkteilnehmerstation, die beispielsweise als multifunktionale Funkteilnehmerstation ausgebildet ist, mit Übertragungsnetzen unterschiedlicher Funkübertragungsschnittstellen kommunizieren möchte, muß sie sich zuvor an die jeweilige Funkübertragungsschnittstelle anpassen. Daher ist es erforderlich, daß die adaptive Funkteilnehmerstation Schnittstelleninformationen wie z.B. über Modulationsverfahren, Codierungsalgorithmus, Diensteverfügbarkeit erhält. Dies bedeutet, daß es für eine adaptive Funkteilnehmerstation notwendig ist, ihre Fähigkeiten und Eigenschaften durch Laden der entsprechenden Schnittstelleninformationen an das jeweilige Übertragungsnetz vor dem Einbuchen anzupassen.

Es ist Aufgabe der vorliegenden Erfindung, ein Verfahren der eingangs genannten Art und eine entsprechende Funkteilnehmerstation anzugeben, durch das bzw. die eine Anpassung an Übertragungsnetze verschiedener Funkübertragungsschnittstellen möglich ist.

Diese Aufgabe wird gemäß der Erfindung durch die Merkmale des Patentanspruchs 1 bezüglich des Verfahrens und durch die Merkmale des Patentanspruchs 11 bezüglich der Funkteilnehmerstation gelöst. Weiterbildungen der Erfindung sind in den Unteransprüchen angegeben.

Die adaptive Funkteilnehmerstation sendet eine Anforderung zu dem Übertragungsnetz aus, in dem sie sich einbuchen möchte, durch die Schnittstelleninformationen zur Kennzeichnung der Funkübertragungsschnittstelle des Übertragungsnetzes abgerufen werden. Eine Steuerungseinrichtung im Übertragungsnetz empfängt die Anforderung, wertet sie aus und leitet sie an eine Dateneinrichtung weiter, von der die Schnittstelleninformationen bereitgestellt werden. Zur Übertragung der Schnittstelleninformationen wird eine Datenverbindung zwischen der Dateneinrichtung und der Funkteilnehmerstation aufgebaut, die die Schnittstelleninformationen in der Abwärtsübertragungsrichtung über einen Datenkanal eines Datendienstes empfängt.

Die Verwendung eines im Übertragungsnetz nutzbaren Datendienstes zur Anpassung der Funkteilnehmerstation ermöglicht die Übertragung der Schnittstelleninformationen über einen Datenkanal und nicht über einen Signalisierungskanal, so daß im Übertragungsnetz keine zusätzliche Last zur Signalisierung erforderlich ist. Die Übertragung der Schnittstelleninformationen über den Datenkanal erfolgt nur auf Anforderung der Funkteilnehmerstation, d.h. die Funkteilnehmerstation wird nicht ständig über einen Signalisierungskanal (z.B. Broadcast Control Channel im GSM-Mobilfunknetz) mit den Informationen versorgt. Auf diese Weise wird keine Nutzbandbreite für die dauernde Übermittlung der Schnittstelleninformationen verbraucht.

Darüber hinaus ist mit der Erfindung eine Vergebührung der Übertragung der Schnittstelleninformationen zur Funkteilnehmerstation möglich und verursacht keine zusätzliche Komplexität im Übertragungsnetz, da bereits existierende Vergebührungsalgorithmen für den bestehenden Datendienst verwendet werden können. Die auf Anforderung durchgeführte Übertragung der Schnittstelleninformationen in der Abwärtsübertragungsrichtung zur Anpassung der adaptiven Funkteilnehmerstation an das jeweilige Übertragungsnetz ist wesentlich flexibler als die Bereitstellung der Schnittstelleninformationen über die SIM-Karte (Subscriber Identity Module), die der Funkteilnehmer zur Nutzung der Funkteilnehmerstation benötigt. Bei der Einführung neuer Dienste wäre eine neue Programmierung der alten SIM-Karte oder der Kauf einer neuen SIM-Karte erforderlich, was zusätzliche Aktionen von Seiten des Funkteilnehmers mit sich bringt. Durch die Erfindung kann die adaptive Funkteilnehmerstation automatisch oder durch manuelle Eingabe an das Übertragungsnetz mit der zugehörigen Funkübertragungsschnittstelle angepaßt werden. Im Falle einer automatischen Anpassung ist eine standardisierte Identifikation der Funkübertragungsschnittstelle zwischen der Funkteilnehmerstation und dem Übertragungsnetz bzw. dem Funkübertragungssystem des Übertragungsnetzes notwendig.

Die Erfindung wird anhand eines in Figuren dargestellten Ausführungsbeispiels näher erläutert. Im einzelnen zeigen
- Figur 1: einen Signalflußplan bei erfolgreicher Anforderung der Schnittstelleninformationen aus einem Mobilfunknetz und
- Figur 2: einen Signalflußplan bei nicht erfolgreicher Anforderung der Schnittstelleninformationen aus dem Mobilfunknetz.

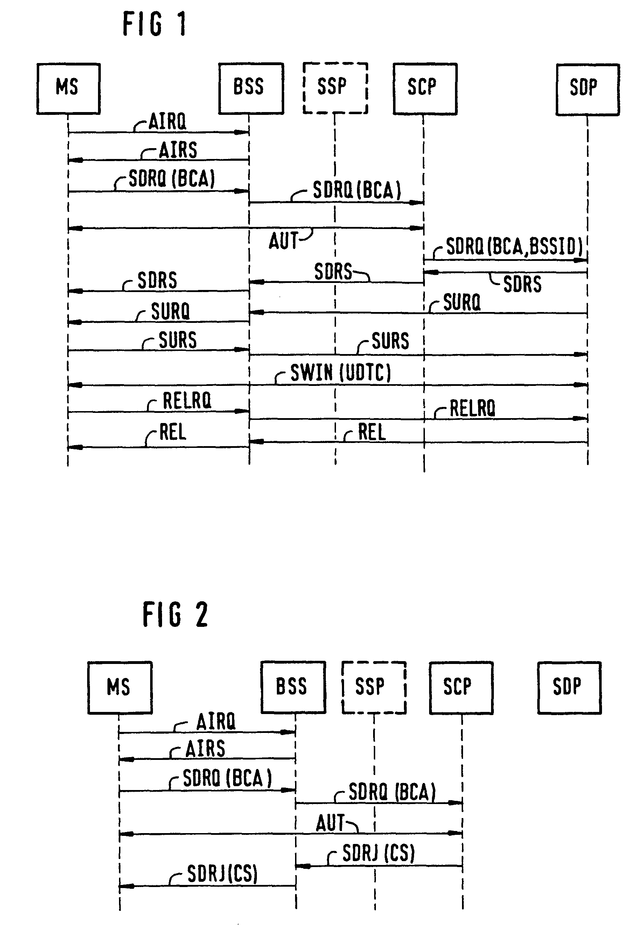

Figur 1 zeigt in einem Signalflußplan die Anpassung einer adaptiven Funkteilnehmerstation an ein Übertragungsnetz, das im vorliegenden Beipiel ein mobiles Telekommunikationsnetz ist. Bei den Übertragungsnetzen kann zwischen privaten und öffentlichen Netzen, nationalen öffentlichen Netzen (z.B. zellulares Mobilfunknetz), internationalen Netzen (z.B. GSM-Mobilfunknetz, PSTN-Festnetz (Public Switched Telephone Networks)) und globalen Netzen (z.B. Satellitennetze) mit zugehörigen Funkübertragungsschnittstellen unterschieden werden. Auch ein Zusammenwachsen von Festnetzen und mobilen Netzen in einem einzelnen universellen Netz (z.B. UMTS (Universal Mobile Telecommunications System)) zur netzübergreifenden personenbezogenen Kommunikation ist denkbar. Die multifunktionale (multi-mode) adaptive Funkteilnehmerstation muß sich daher zuerst an die jeweilige Funkübertragungsschnittstelle des Übertragungsnetzes, in dem sie sich einbuchen möchte, anpassen.

Die adaptive Funkteilnehmerstation MS ist über die Funkübertragungsschnittstelle (Air Interface) mit einem Funkübertragungssystem BSS verbunden, das die funkübertragungsspezifischen Anteile des Übertragungsnetzes umfaßt. Das Funkübertragungssystem BSS weist Sende/Empfangsstationen zum Senden und Empfangen der Signale über die Funkübertragungsschnittstelle sowie Stationssteuerungen zur Steuerung der mit der Funkübertragung zusammenhängenden Funktionen und Einrichtungen auf. Die vermittlungstechnischen Funktionen werden im Übertragungsnetz von einem Vermittlungssystem übernommen, das beim Mobilfunknetz üblicherweise mehrere Mobilvermittlungsstellen zur Verbindungssteuerung und Signalisierung, sowie zur Mobilitätsverwaltung, wie beispielsweise Aufenthaltsregistrierung, und dezentrale sowie zentrale Teilnehmerdatenbasen umfaßt. Die Mobilvermittlungsstellen können dabei die Vermittlungs- und Signalisierungsschnittstellen zu weiteren Vermittlungseinrichtungen desselben Mobilfunknetzes oder anderer Mobilfunknetze und zu anderen Telekommunikationsnetzen bilden.

Zur Einführung und Abwicklung neuer Dienste in ein bestehendes Übertragungsnetz werden Dienstesteuerungsstellen (Service Control Points) SCP, Dienstevermittlungsstellen (Service Switching Points) SSP und Dienstedatenstellen (Service Data Points) SDP eingebunden, die die Netzarchitektur eines Intelligenten Netzes (Intelligent Network IN) bilden - siehe "Intelligente Netze beschleunigen Einführung neuer Dienste", in telcom report 12 (1989), Heft 5, Seiten 142 bis 145 oder "IN-Architektur, Anrufverarbeitung und Signalisierung", in tec 2/94, Seiten 4 bis 7. Die Dienstesteuerungsstelle SCP ist ein zentraler Netzknoten, der mindestens die Dienstelogik, gegebenenfalls auch die Dienstedaten, zur Erzeugung und Abwicklung neuer Dienste enthält, während die Dienstevermittlungsstelle die Ausführung der Vermittlungsfunktionen, wie beispielsweise die Ermittlung von Triggerzeitpunkten im Vermittlungsprozeß innerhalb der allgemeinen IN-Architektur übernimmt. Die Dienstedatenstelle SDP enthält die dienstebezogenen Daten und die Netzdaten und dient somit als Datengeber (Data Server) bei der Realisierung eines bestimmten Dienstes. Die diensteunabhängige Architektur des Intelligenten Netzes wird von der Struktur eines Mobilfunknetzes, beipielsweise nach dem GSM-Standard, unterstützt, so daß die Dienstelogik unabhängig von der Logik für das Telekommunikationsnetz ist. Es können auf diese Weise neue Dienste in das Telekommunkationsnetz schnell und einfach eingeführt werden, ohne daß zuvor aufwendige Änderungen im Netz vollzogen werden müssen. Beispielsweise entspricht eine Mobilvermittlungsstelle im GSM-Mobilfunknetz der Dienstevermittlungsstelle SSP des Intelligenten Netzes, während die zentralen und dezentralen Teilnehmerdatenbasen (Home Location Register HLR, Visitor Location Register VLR) im GSM-Mobilfunknetz die Dienstesteuerungsstellen SCP des Intelligenten Netzes repräsentieren.

Der in Figur 1 dargestellte Signalfluß zwischen den oben beschriebenen Einrichtungen gilt für die erfolgreiche Anforderung von Schnittstelleninformationen, die beispielseweise als Softwaremodule in der Dienstedatenstelle SDP gespeichert und zur Anpassung der adaptiven Funkteilnehmerstation MS an das Mobilfunknetz in der Abwärtsübertragungsrichtung (Down Link) gesendet werden. Die von der Dienstedatenstelle SDP zur Verfügung stehenden Schnittstelleninformationen betreffen beispielsweise die Diensteverfügbarkeit, Modulation, Kodierung, Frequenz, Bandbreite, das Vielfachzugriffsverfahren, die Datenraten usw., die für eine adaptive Funkteilnehmerstation MS notwendig sind, um die Übertragungsfähigkeiten und das Fehlerverhalten an das jeweilige Übertragungsnetz manuell oder automatisch anpassen zu können.

Für den Fall einer automatischen Anpassung der adaptiven Funkteilnehmerstation MS sendet die Funkteilnehmerstation MS eine Identifikationsabfrage AIRQ zur Ermittlung der Funkübertragungsschnittstelle zum Funkübertragungssystem BSS des Mobilfunknetzes aus, das als Antwort ein Identifikationssignal AIRS zur Identifikation der Funkübertragungsschnittstelle an die Funkteilnehmerstation MS zurücksendet. Auf das Aussenden der Identifikationsabfrage AIRQ kann verzichtet werden, wenn zur Identifikation der Funkübertragungsschnittstelle zwischen der Funkteilnehmerstation MS und dem Funkübertragungssystem BSS ein Broadcastverfahren verwendet wird, bei dem das Identifikationssignal AIRS zwischen den Funkteilnehmerstationen und dem Funkübertragungssystem des Mobilfunknetzes gesendet wird.

Die adaptive Funkteilnehmerstation MS sendet eine Anforderung SDRQ zur Übersendung der Schnittstelleninformationen in der Aufwärtsübertragungsrichtung (Up Link) zum Mobilfunknetz aus, in dem diese Anforderung SDRQ vom Funkübertragungssystem BSS empfangen und über die Dienstevermittlungsstelle SSP an die Dienstesteuerungsstelle SCP weitergeleitet wird. In der Anforderung SDRQ werden die Übertragungsfähigkeiten BCA (Bearer Capabilities) der Funkteilnehmerstation MS für Datendienste mitgesendet, so daß die Dienstesteuerungsstelle SCP anhand der empfangenen Übertragungsfähigkeiten BCA überprüfen kann, ob die Übertragung der Schnittstelleninformationen gemäß einem Datendienst über einen Datenkanal durchführbar ist. Darüber hinaus stellt die Dienstesteuerungsstelle SCP fest, ob der Netzteilnehmer, der die Funkteilnehmerstation MS benutzt, berechtigt ist, die Schnittstelleninformationen abzurufen. Die Berechtigungsüberprüfung zur Nutzung des Übertragungsnetzes wird, wie üblicherweise bei jeder Verbindung, von der Dienstesteuerungsstelle SCP durch Aussenden eines Authentifikationssignals AUT initiiert, das von der Funkteilnehmerstation MS empfangen und beantwortet wird. Liegt ein positives Prüfungsergebnis vor, wird die Anforderung SDRQ zur Übersendung der Schnittstelleninformationen von der Dienstesteuerungsstelle SCP an die Dienstedatenstelle SDP weitergeleitet, die die Schnittstelleninformationen zur Kennzeichnung der Funkübertragungsschnittstelle zur Verfügung stellen kann. In der weitergereichten Anforderung SDRQ sind ebenfalls die Übertragungsfähigkeiten BCA der Funkteilnehmerstation MS für Datendienste und darüber hinaus eine Systemkennung BSSID zur Identifikation des Funkübertragungssystems im Übertragungsnetz enthalten.

Nach Empfang der Anforderung SDRQ sendet die Dienstedatenstelle SDP ein Bestätigungssignal SDRS zur Dienstesteuerungsstelle SCP zurück, die das eintreffende Bestätigungssignal SDRS über die zuständige Mobilvermittlungsstelle MSC bzw. die Dienstevermittlungsstelle SSP zum Funkübertragungssystem BSS im Mobilfunknetz weiterleitet. Die anfragende Funkteilnehmerstation MS empfängt das Bestätigungssignal SDRS über die Funkübertragungsschnittstelle vom Funkübertragungssystem BSS, so daß ihr dadurch der Eingang der Anforderung SDRQ bei der Dienstedatenstelle SDP bestätigt wird. Nach Aussenden des Bestätigungssignals SDRS wird eine Datenverbindung zur Nutzung eines im Mobilfunknetz vorhandenen Datendienstes (Bearer Service) zwischen der Dienstedatenstelle SDP und der Funkteilnehmerstation MS direkt aufgebaut. Zu diesem Zweck wird von der Dienstedatenstelle SDP eine Anforderung SURQ zum Aufbau der Datenverbindung ausgesendet und über das Funkübertragungssystem BSS zur Funkteilnehmerstation MS in der Abwärtsübertragungsrichtung übertragen. Dadurch, daß der Dienstedatenstelle SDP die Übertragungsfähigkeiten BCA der Funkteilnehmerstation MS bekannt sind, wird aus den nutzbaren Datendiensten der Datendienst zur Übertagung der Schnittstelleninformationen SWIN ausgewählt, der die schnellstmögliche Übertragung gewährleistet. Die Funkteilnehmerstation MS sendet als Antwort ein Aufbausignal SURS in der Aufwärtsübertragungsrichtung über die Funkübertragungsschnittstelle zum Mobilfunknetz aus, in dem es über die genannten Einrichtungen bis zur Dienstedatenstelle SDP weitergeleitet wird. Mit Empfang des Aufbausignals SURS wird der erfolgreiche Aufbau der Datenverbindung der Dienstedatenstelle SDP bestätigt. Sobald die Datenverbindung aufgebaut ist, können die Schnittstelleninformationen SWIN über einen Datenkanal UDTC des ausgewählten Datendienstes in der Abwärtsübertragungsrichtung zur Funkteilnehmerstation MS gesendet werden.

Durch Verwendung des Datenkanals UDTC zum Laden der adaptiven Funkteilnehmerstation MS mit den von der Dienstedatenstelle SDP bereitgestellten, die Schnittstelleninformationen SWIN enthaltenden Softwaremodulen braucht im Übertragungsnetz keine zusätzliche Komplexität zur Anpassung der Funkteilnehmerstation durch Übertragung der Schnittstelleninformationen in der Abwärtsübertragungsrichtung aufgewendet zu werden. Die Signalisierungskanäle im Übertragungsnetz werden nicht belastet, da ein vorhandener Datendienst verwendet wird.

Nach vollständiger und korrekter Übertragung der angeforderten Schnittstelleninformationen SWIN über den Datenkanal UDTC wird die Datenverbindung zwischen der Funkteilnehmerstation MS und der Dienstedatenstelle SDP abgebaut. Von der Funkteilnehmerstation MS wird eine Anforderung RELRQ erzeugt, zum Auslösen der Datenverbindung über die Funkübertragungsschnittstelle zum Mobilfunknetz in der Aufwärtsübertragungsrichtung gesendet und zur Dienstedatenstelle SDP übermittelt. Als Antwort auf die Anforderung RELRQ sendet die Dienstedatenstelle SDP ein Auslösesignal REL zur Funkteilnehmerstation MS zurück. Daraufhin kann sich die Funkteilnehmerstation MS erneut an ein Übertragungsnetz mit zugehöriger Funkübertragungsschnittstelle adaptieren, indem es sich an deren charakteristische Eigenschaften durch Laden der entsprechenden Schnittstelleninformationen gemäß dem oben beschriebenen Verfahren anpaßt.

Für den Fall, daß eine Datenverbindung über die Funkübertragungsschnittstelle des Übertragungsnetzes, an das die Anforderung SDRQ gerichtet wird, nicht aufgebaut werden kann, werden die Schnittstelleninformationen SWIN über eine Ersatz-Datenverbindung in einem anderen Übertragungsnetz, in dem die Funkteilnehmerstation MS zuvor bereits eingebucht war, von der Dateneinrichtung abgerufen. Bei einer im Mobilfunknetz aufzubauenden Datenverbindung kann die Ersatz-Datenverbindung beispielsweise aus einer Datenverbindung über das globale Satelliten-Mobilfunknetz (z.B. Iridium) mit der entsprechenden Funkübertragungsschnittstelle bestehen.

Figur 2 zeigt den Signalfluß zwischen den oben beschriebenen Einrichtungen für den Fall, daß eine Anpassung der adaptiven Funkteilnehmerstation MS an das Übertragungsnetz durch Nutzung einer Datenverbindung nicht erfolgreich durchführbar ist. Angenommen, die Funkteilnehmerstation MS sendet wiederum die Identifikationsabfrage AIRQ zur Ermittlung der Funkübertragungsschnittstelle in der Aufwärtsübertragungsrichtung zum Funkübertragungssystem BSS aus, so erhält sie als Antwort das Identifikationssignal AIRS zur Identifikation der Funkübertragungsschnittstelle zurück. Daraufhin sendet die Funkteilnehmerstation MS die Anforderung SDRQ in der Aufwärtsübertragungsrichtung zum Übertragungsnetz aus und teilt darin ihre Übertragungsfähigkeiten BCA für Datendienste mit. Die Anforderung SDRQ mit den Übertragungseigenschaften BCA der anfragenden Funkteilnehmerstation MS wird im Übertragungsnetz an die eingebundene Dienstesteuerungsstelle SCP weitergeleitet. Durch Aussenden des Authentifikationssignals AUT und Empfang von Antwortsignalen überprüft die Dienstesteuerungsstelle SCP, ob die Funkteilnehmerstation MS zur Nutzung des Netzes berechtigt ist. Darüber hinaus stellt die Dienstesteuerungsstelle SCP fest, ob der Netzteilnehmer, der die Funkteilnehmerstation MS benutzt, berechtigt ist, Schnittstelleninformationen abzurufen. Für den Fall, daß die Funkteilnehmerstation MS entweder nicht berechtigt oder wegen mangelnder Übertragungsfähigkeiten nicht geeignet ist, wird von der Dienstesteuerungsstelle SCP ein Zurückweisungssignal SDRJ erzeugt und über die Dienstevermittlungsstelle SSP und das Funkübertragungssystem BSS zur Funkteilnehmerstation MS ausgesendet. In dem Zurückweisungssignal SDRJ wird ein Grund CS für die Zurückweisung der Anforderung SDRQ an die Funkteilnehmerstation MS mitgesendet. Aus dem Signalfluß für den nicht erfolgreichen Fall der Anpassung der adaptiven Funkteilnehmerstation MS an das Übertragungsnetz wird deutlich, daß kein Datenkanal belegt wird, was bedeutet, daß eine Verschwendung von Übertragungskapazität, insbesondere auf der Funkübertragungsschnittstelle, vermieden wird. Darüber hinaus wird auch die Dienstedatenstelle SDP im nicht erfolgreichen Anpassungsfall nicht belastet.

## Patentansprüche

1. Verfahren zur Anpassung von adaptiven Funkteilnehmerstationen (MS) an Übertragungsnetze mit unterschiedlichen Funkübertragungsschnittstellen, bei dem
- von der Funkteilnehmerstation (MS) zu dem Übertragungsnetz, in dem die Funkteilnehmerstation (MS) sich einbuchen möchte, eine Anforderung (SDRQ) ausgesendet wird, durch die Schnittstelleninformationen (SWIN) zur Kennzeichnung der Funkübertragungsschnittstelle des Übertragungsnetzes abgerufen werden,
- die Anforderung (SDRQ) im Übertragungsnetz von einer Steuerungseinrichtung (z.B. SCP) empfangen, ausgewertet und an eine Dateneinrichtung (z.B. SDP) weitergeleitet wird, von der die Schnittstelleninformationen (SWIN) bereitgestellt werden und bei dem
- eine Datenverbindung zwischen der Dateneinrichtung (z.B. SDP) und der Funkteilnehmerstation (MS) aufgebaut und die Schnittstelleninformationen (SWIN) in der Abwärtsübertragungsrichtung über einen Datenkanal (UDTC) eines Datendienstes zur Funkteilnehmerstation (MS) übertragen werden.

2. Verfahren nach Anspruch 1,
**dadurch gekennzeichnet,**
**daß** in der Anforderung (SDRQ) zur Übersendung der Schnittstelleninformationen (SWIN) die Übertragungsfähigkeiten (BCA) der Funkteilnehmerstation (MS) für Datendienste mitgesendet werden und daß vor dem Aufbau der Datenverbindung von der Steuerungseinrichtung (z.B. SCP) anhand der empfangenen Übertragungsfähigkeiten (BCA) überprüft wird, ob die Übertragung der Schnittstelleninformationen (SWIN) über den Datenkanal (UDTC) möglich ist.

3. Verfahren nach Anspruch 1 oder 2,
**dadurch gekennzeichnet,**
**daß** vor dem Aufbau der Datenverbindung von der Steuerungseinrichtung (z.B. SCP) überprüft wird, ob ein Netzteilnehmer, der die Funkteilnehmerstation (MS) benutzt, berechtigt ist, die Anforderung (SDRQ) zur Übersendung der Schnittstelleninformationen (SWIN) an das Übertragungsnetz zu richten.

4. Verfahren nach Anspruch 2 und 3,
**dadurch gekennzeichnet,**
**daß** bei nicht berechtigtem Netzteilnehmer, der die Funkteilnehmerstation (MS) benutzt, oder bei ungeeigneten Übertragungsfähigkeiten (BCA) der Funkteilnehmerstation (MS) die Anforderung (SDRQ) zur Übersendung der Schnittstelleninformationen (SWIN) von der Steuerungseinrichtung (z.B. SCP) zurückgewiesen und der Grund für die Zurückweisung der Anforderung (SDRQ) der Funkteilnehmerstation (MS) übermittelt wird.

5. Verfahren nach Anspruch 2 und 3,
**dadurch gekennzeichnet,**
**daß** bei berechtigtem Netzteilnehmer, der die Funkteilnehmerstation (MS) benutzt, und bei geeigneten Übertragungsfähigkeiten (BCA) der Funkteilnehmerstation (MS) die Anforderung (SDRQ) zur Übersendung der Schnittstelleninformationen (SWIN) von der Dateneinrichtung (z.B. SDP) an die Funkteilnehmerstation (MS) bestätigt wird.

6. Verfahren nach Anspruch 2 und 3,
**dadurch gekennzeichnet,**
**daß** nach der Übertragung der Schnittstelleninformationen (SWIN) über den Datenkanal (UDTC) des Datendienstes die zwischen der Funkteilnehmerstation (MS) und der Dateneinrichtung (z.B. SDP) aufgebaute Datenverbindung abgebaut wird.

7. Verfahren nach einem der vorhergehenden Ansprüche,
**dadurch gekennzeichnet,**
**daß** aus mehreren möglichen Datendiensten der Datendienst ausgewählt wird, mit dem die Schnittstelleninformationen (SWIN) schnellstmöglich übertragen werden.

8. Verfahren nach einem der vorhergehenden Ansprüche,
**dadurch gekennzeichnet,**
**daß** für den Fall, daß eine Datenverbindung über die Funkübertragungsschnittstelle des Übertragungsnetzes, an das die Anforderung (SDRQ) gerichtet wird, nicht aufgebaut werden kann, die Schnittstelleninformationen über eine Ersatz-Datenverbindung in einem anderen Übertragungsnetz, in dem die Funkteilnehmerstation (MS) bereits eingebucht war, von der Dateneinrichtung abgerufen werden.

9. Verfahren nach Anspruch 8,
**dadurch gekennzeichnet,**
**daß** als Ersatz-Datenverbindung eine satellitengestützte Datenverbindung auf der Funkübertragungsschnittstelle verwendet wird.

10. Verfahren nach einem der vorhergehenden Ansprüche,
**dadurch gekennzeichnet,**
**daß** als Übertragungsnetz ein Mobilfunknetz verwendet wird, in dem die Anforderung (SDRQ) an eine Dienstesteuerungsstelle (SCP) und an eine Dienstedatenstelle (SDP), die zur Abwicklung von Diensten, basierend auf der Netzstruktur eines Intelligenten Netzes, in das Mobilfunknetz eingebunden werden, gerichtet wird.

11. Adaptive Funkteilnehmerstation (MS) zur Anpassung an Übertragungsnetze mit unterschiedlichen Funkübertragungsschnittstellen, derart ausgestaltet, daß
- zu dem Übertragungsnetz, in dem die Funkteilnehmerstation (MS) sich einbuchen möchte, eine Anforderung (SDRQ) ausgesendet wird, durch die Schnittstelleninformationen (SWIN) zur Kennzeichnung der Funkübertragungsschnittstelle des Übertragungsnetzes abgerufen werden und die im Übertragungsnetz von einer Steuerungseinrichtung (z.B. SCP) empfangen, ausgewertet und an eine Dateneinrichtung (z.B. SDP) weitergeleitet wird, von der die Schnittstelleninformationen (SWIN) bereitgestellt werden, und daß
- die Schnittstelleninformationen (SWIN) in der Abwärtsübertragungsrichtung über einen Datenkanal (UDTC) eines Datendienstes empfangen werden, zu dem eine Datenverbindung zwischen der Dateneinrichtung (z.B. SDP) und der Funkteilnehmerstation (MS) aufgebaut ist.

## Claims

1. Method for matching adaptive radio subscriber stations (MS) to transmission networks having different radio transmission interfaces, in which
- a request (SDRQ) is transmitted from the radio subscriber station (MS) to the transmission network in which the radio subscriber station (MS) wishes to log on, by means of which request (SDRQ), interface information (SWIN) is called up in order to identify the radio transmission interface of the transmission network,
- the request (SDRQ) is received in the transmission network by a control device (for example SCP), is evaluated and is passed on to a data device (for example, SDP), by which the interface information (SWIN) is provided, and in the case of which method
- a data link is set up between the data device (for example SDP) and the radio subscriber station (MS), and the interface information (SWIN) is transmitted in the downlink transmission direction via a data channel (UDTC) of a data service to the radio subscriber station (MS).

2. Method according to Claim 1,
**characterized**
**in that** the transmission capabilities (BCA) of the radio subscriber station (MS) for data services are also transmitted in the request (SDRQ) for transmission of the interface information (SWIN), and in that, before setting up the data link, the control device (for example SCP) uses the received transmission capabilities (BCA) to check whether it is possible to transmit the interface information (SWIN) via the data channel (UDTC).

3. Method according to Claim 1 or 2,
**characterized**
**in that**, before setting up the data link, the control device (for example SCP) checks whether a network subscriber who is using the radio subscriber station (MS) is authorized to direct to the transmission network the request (SDRQ) for transmission of the interface information (SWIN).

4. Method according to Claims 2 and 3,
**characterized**
**in that**, if the network subscriber who is using the radio subscriber station (MS) is not authorized, or if the transmission capabilities (BCA) of the radio subscriber station (MS) are unsuitable, the request (SDRQ) for transmission of the interface information (SWIN) is rejected by the control device (for example SCP), and the reason for the rejection of the request (SDRQ) is transmitted to the radio subscriber station (MS).

5. Method according to Claims 2 and 3,
**characterized**
**in that**, if the network subscriber who is using the radio subscriber station (MS) is authorized and if the transmission capabilities (BCA) of the radio subscriber station (MS) are suitable, the request (SDRQ) for transmission of the interface information (SWIN) is confirmed by the data device (for example SDP) to the radio subscriber station (MS).

6. Method according to Claims 2 and 3,
**characterized**
**in that**, after the transmission of the interface information (SWIN) via the data channel (UDTC) of the data service, the data link which was set up between the radio subscriber station (MS) and the data device (for example SDP) is cleared down.

7. Method according to one of the preceding claims,
**characterized**
**in that**, from the plurality of possible data services, that data service is selected with which the interface information (SWIN) is transmitted as quickly as possible.

8. Method according to one of the preceding claims,
**characterized**
**in that**, in the case where it is not possible to clear down a data link via the radio transmission interface of the transmission network to which the request (SDRQ) is directed, the interface information is called up by the data device via a substitute data link in another transmission network in which the radio subscriber station (MS) has already logged on.

9. Method according to Claim 8,
**characterized**
**in that** a satellite-assisted data link is used as the substitute data link to the radio transmission interface.

10. Method according to one of the preceding claims,
**characterized**
**in that** a mobile radio network is used as the transmission network, in which mobile radio network the request (SDRQ) is directed to a service control point (SCP) and to a service data point (SDP) which are linked into the mobile radio network in order to handle services, based on the network structure of an intelligent network.

11. Adaptive radio subscriber station (MS) for matching to transmission networks having different radio transmission interfaces, designed in such a way that
- a request (SDRQ) is transmitted to the transmission network in which the radio subscriber station (MS) wishes to log on, by means of which request (SDRQ), interface information (SWIN) is called up in order to identify the radio transmission interface of the transmission network, and which request is received in the transmission network by a control device (for example SCP), is evaluated and is passed on to a data device (for example SDP), by which the interface information (SWIN) is provided, and that the interface information (SWIN) is received in the downlink transmission direction via a data channel (UDTC) of a data service, to which a data link is set up between the data device (for exmaple SDP) and the radio subscriber station (MS).

## Revendications

1. Procédé pour l'adaptation de postes d'abonné radio adaptatifs (MS) à des réseaux de transmission ayant des interfaces de radiotransmission différentes, dans lequel
- une requête (SDRQ) est envoyée du poste d'abonné radio (MS) au réseau de transmission dans lequel le poste d'abonné radio (MS) souhaite s'enregistrer, requête à travers laquelle sont appelées des informations d'interface (SWIN) servant à **caractériser** l'interface de radiotransmission du réseau de transmission,
- la requête (SDRQ) est reçue, dans le réseau de transmission, par un dispositif de commande (par exemple SCP) qui l'analyse et la transmet à un dispositif de données (par exemple SDP) qui fournit les informations d'interface (SWIN), et dans lequel
- une liaison de données est établie entre le dispositif de données (par exemple SDP) et le poste d'abonné radio (MS) et les informations d'interface (SWIN) sont transmises au poste d'abonné radio (MS) dans le sens descendant par le biais d'un canal de données (UDTC) d'un service de données.

2. Procédé selon la revendication 1, **caractérisé en ce que**, la requête (SDRQ) d'envoi des informations d'interface (SWIN) contient les capacités de transmission (BCA) du poste d'abonné radio (MS) pour les services de données, qui sont envoyées en même temps qu'elle, et **en ce que**, avant l'établissement de la liaison de données, le dispositif de commande (par exemple SCP) vérifie, en se basant sur les capacités de transmission (BCA) reçues, si la transmission des informations d'interface (SWIN) est possible par le biais du canal de données (UDTC).

3. Procédé selon la revendication 1 ou 2, **caractérisé en ce que**, avant l'établissement de la liaison de données, le dispositif de commande (par exemple SCP) vérifie si un abonné réseau utilisant le poste d'abonné radio (MS) a le droit d'adresser au réseau de transmission la requête (SDRQ) d'envoi des informations d'interface (SWIN).

4. Procédé selon les revendications 2 et 3, **caractérisé en ce que**, en cas de non autorisation de l'abonné réseau utilisant le poste d'abonné radio (MS) ou en cas de capacités de transmission (BCA) inadaptées du poste d'abonné radio (MS), la requête (SDRQ) d'envoi des informations d'interface (SWIN) est rejetée par le dispositif de commande (par exemple SCP) et le motif du rejet de la requête (SDRQ) est communiqué au poste d'abonné radio (MS).

5. Procédé selon les revendications 2 et 3, **caractérisé en ce que**, si l'abonné réseau utilisant le poste d'abonné radio (MS) dispose d'une autorisation et si les capacités de transmission (BCA) du poste d'abonné radio (MS) sont adaptées, la requête (SDRQ) d'envoi des informations d'interface (SWIN) est confirmée au poste d'abonné radio (MS) par le dispositif de données (par exemple SDP).

6. Procédé selon les revendications 2 et 3, **caractérisé en ce que**, après la transmission des informations d'interface (SWIN) par le biais du canal de données (UDTC) du service de données, la liaison de données établie entre le poste d'abonné radio (MS) et le dispositif de données (par exemple SDP) est supprimée.

7. Procédé selon l'une quelconque des revendications précédentes, **caractérisé en ce que** l'on sélectionne, parmi plusieurs services de données possibles, le service de données qui permet de transmettre le plus rapidement possible les informations d'interface (SWIN).

8. Procédé selon l'une quelconque des revendications précédentes, **caractérisé en ce que**, dans le cas où une liaison de données ne peut pas être établie par le biais de l'interface de radiotransmission du réseau de transmission auquel est adressée la requête (SDRQ), les informations d'interface sont appelées par le dispositif de données par le biais d'une liaison de données de substitution dans un autre réseau de transmission dans lequel le poste d'abonné radio (MS) était déjà enregistré.

9. Procédé selon la revendication 8, **caractérisé en ce que** l'on utilise, en tant que liaison de données de substitution, une liaison de données par satellite sur l'interface de radiotransmission.

10. Procédé selon l'une quelconque des revendications précédentes, **caractérisé en ce que** l'on utilise, en tant que réseau de transmission, un réseau de téléphonie mobile dans lequel la requête (SDRQ) est adressée à un centre de gestion de services (SCP) et à un centre de données de service (SDP) qui sont intégrés dans le réseau de téléphonie mobile pour le développement de services, en se basant sur la structure réseau d'un réseau intelligent.

11. Poste d'abonné radio adaptatif (MS) pour l'adaptation à des réseaux de transmission ayant des interfaces de radiotransmission différentes, exécuté de manière à ce que
- une requête (SDRQ) soit envoyée au réseau de transmission dans lequel le poste d'abonné radio (MS) souhaite s'enregistrer, requête à travers laquelle sont appelées des informations d'interface (SWIN) servant à **caractériser** l'interface de radiotransmission du réseau de transmission, et qui est reçue, dans le réseau de transmission, par un dispositif de commande (par exemple SCP) qui l'analyse et la transmet à un dispositif de données (par exemple SDP) qui fournit les informations d'interface (SWIN), et à ce que
- les informations d'interface (SWIN) soient reçues, dans le sens descendant, par le biais d'un canal de données (UDTC) d'un service de données pour lequel une liaison de données est établie entre le dispositif de données (par exemple SDP) et le poste d'abonné radio (MS).
